# EUROPEAN PATENT SPECIFICATION

(11) **EP 3 603 400 B1**
(45) Date of publication and mention of the grant of the patent: **07.08.2024**
(21) Application number: 17903606.6
(22) Date of filing: 03.05.2017
(51) Int. Cl.: A01N 59/20, A01N 41/04, A01N 35/06, A01N 37/44, A01P 21/00

(54) **COPPER-BASED LIQUID FORMULATION FOR ENHANCING SELF-DEFENCE IN PLANTS AND USE THEREOF**
FLÜSSIGE FORMULIERUNG AUF KUPFERBASIS ZUR VERBESSERUNG DER SELBSTABWEHR BEI PFLANZEN UND VERWENDUNG DAVON
FORMULATION LIQUIDE À BASE DE CUIVRE RENFORÇATEUR DE L'AUTODÉFENSE DANS DES PLANTES ET SON UTILISATION

(30) Priority: 31.03.2017 ES 201700511
(43) Date of publication of application: 05.02.2020
(73) Proprietor: Agrostock, S.A., 22520 Fraga (Huesca) (ES)
(72) Inventor: CASAS CHINÉ, Jorge, 22520 Fraga (Huesca) (ES)
(74) Representative: Fernandez Pou, Felipe
(86) International application number: PCT/ES2017/070271
(87) International publication number: WO 2018/178411

(56) References cited:
- ES-A1- 2 395 578
- ES-A1- 2 435 069
- US-A1- 2008 039 320
- No further relevant documents disclosed

## Description

The present invention relates to a copper-based liquid formulation enhancing plant self-defence, as well as to the use thereof.

More particularly, the invention relates to a liquid formulation which allows decreasing the incidence and severity of symptoms of diseases in plants, particularly grapevine wood.

It use allows improving metabolic processes occurring during the different stages of development, improving the appearance of the treated plants, activating their self-defences and resistance under biotic and abiotic adverse conditions, thereby allowing an increase in the yield and production of crops. To that end, the formulation includes menadione sodium bisulphite (MSB) together with copper in the form of copper sulphate, sodium lignosulphonate, and essential plant amino acids facilitating assimilation of the components of the formula.

The formulation of the invention further acts as a stimulant of certain metabolic reactions of plants that are basic for their development and growth. To complete its effectiveness as a plant stimulant, it includes different amino acids of plant origin in its formulation.

MSB is a water-soluble addition compound of the vitamin K group (2-methyl-1,4-naphthoquinone) belonging to a new class of exogenous inducers of plant resistance against different diseases and viruses and against a number of stress factors (Rama Rao et al., "Menadione sodium bisulphite: A promising plant growth regulator", Plant Growth Regulation Volume 3, No. 2 (1985), pp.: 111-118, 1985). This component acts as an elicitor, that is, as an exogenous activator or inducer of plant resistance against different diseases and viruses and of the plant defensive response in agricultural crops against certain biotic adverse conditions and various abiotic stress factors (thermal, water, saline stress, etc.). Likewise, they additionally act as a stimulant of certain metabolic reactions of plants that are basic for their development and growth, as well as for their adaptation to and resistance against various stress factors.

The eliciting-activating action of MSB on the natural defence mechanisms of plant is due, in part, to the increase in endogenous indoleacetic acid levels in plants, together with an increase in biosynthesis of phytoalexins and of different defensive-antioxidant proteins. In this regard, phytoalexins are phenolic molecules (mono-polyphenols) generated by the plant for defending itself against pathogens (for which purpose they are toxic molecules) ((Rama Rao et al., "Menadione sodium bisulphite: A promising plant growth regulator", Plant Growth Regulation Volume 3, No. 2 (1985), pp.: 111-118, 1985).

The formulation of the invention improves this biosynthesis of proteins as a result of its supply of copper, which plays various roles in said biosynthesis, as shown below.

Copper, which acts as a catalyst of numerous enzymatic reactions, is part of the prosthetic group of a number of proteins such as ascorbic acid, phenol, or cytochrome oxidases, and of the electron transport system of photosynthesis. It favours the use of nitrogen and the synthesis of proteins, further acting as a chlorophyll stabiliser. Copper also favours the metabolism of phenolic substances and, therefore, enhances the resistance of the plant against pathogen attacks.

Furthermore, copper alone is capable of interfering in the germination of spores when it is at concentrations somewhat higher than usual in the plant tissue. Likewise, Cu⁺² ions substitute the H⁺, K⁺, Ca⁺² and Mg⁺² ions present on the cell surface of fungus spores. This substitution results in the alteration of membrane semipermeability, facilitating the penetration of Cu⁺² ions into the cells. Inside the spores, the Cu⁺² ions are attached to various chemical groups, for example imidazoles, carboxyls, phosphates, hydrogen sulphides, amines, or hydroxyls, present in numerous enzymatic proteins. This bond causes a toxic effect (protein denaturation) that disrupts proper cell functioning.

Thus, for example, patent ES 2 201 911, *"Uso de composiciones que contienen menadiona ylo alguno(s) de sus derivatives para bioestimular los mecanismos naturales de defensa de las plantas, a fin de contrarrestar entre otros los daños producidos per pesticides y herbicides"* (Use of compositions containing menadione and/or one/some of its derivatives for biostimulating natural defence mechanisms of plants to counteract, among others, the damage caused by pesticides and herbicides), describes aqueous solutions which may contain, indistinctly or jointly, as active components, Vitamin K3, solid derivatives thereof [preferably menadione sodium bisulphite or MSB] or scarcely soluble derivatives thereof [preferably menadione nicotinamide bisulphite or MNB], with respective concentrations comprised between 0.0001 and 200 ppm, 0.001 and 10000 ppm, 0.001 and 10000 ppm, preferably Vitamin K3 between 0.001 and 100 ppm, MSB between 0.01 and 5000 ppm, MNB between 0.01 and 5000 ppm, for their application in agriculture and horticulture, preferably by spraying on the aerial part of the plant or through the irrigation system, and they can be mixed with several additives, such as organic and inorganic fertilizers, insecticides, nematocides, fungicides, bactericides, or herbicides.

Patent ES 2332494 B1, *"Use de menadiona para aumentarla tolerancia al estres saline de las plantas"* (Use of menadione to increase the tolerance to saline stress in plants) relates to the use of an aqueous composition comprising menadione and/or some of its water-soluble derivatives to induce tolerance to saline stress in plants and/or seeds, wherein the aqueous composition comprises, particularly, 3.3 × 10⁻⁷ to 0.66 mM of menadione (Vitamin K3); 3.3 x 10⁻⁶ to 33.3 mM of a water-soluble Vitamin K3 derivative which is a bisulphite selected from menadione sodium bisulphite (MSB), potassium bisulphite, ammonium bisulphite, or magnesium bisulphite; 3.3 × 10⁻⁵ a 33.3 mM of a of Vitamin K3 derivative with a low level of water solubility which is a bisulphite selected from menadione nicotinamide bisulphite (MNB), menadione p-aminobenzoic acid bisulphite, menadione histidine bisulphite, menadione adenine bisulphite, menadione nicotinic acid bisulphite, or menadione tryptophan bisulphite; or any combination of the compositions according to (a), (b) and/or (c).

Patent EP 1538136 B1, "Fertilizer composition to stimulate the absorption of nutritive substances in plants", relates to a composition comprising a mixture of vitamin K and/or derivatives thereof, alginic acid and/or derivatives thereof, and betaine.

Patent EP2403336B1 describe compositions for the treatment of plants, particularly food crops, to control the incidence and/or spread of pathogenic fungi and bacteria and other diseases in said plants, and to provide improved plant health and/or food crop yields, the plant treatment compositions comprising copper alginate salts and at least one amine compound and/or ammonia, wherein said compositions exclude other pest-controlling active ingredients in plant growth regulation of the growth of plants. Likewise, patent EP1535515B1 describes the use of a copper-containing formulation for plant disease control, the copper-containing formulation divalent copper and polyphosphate residues, wherein the amount of the polyphosphate residues per one chemical equivalent of the divalent copper is higher than one chemical equivalent, the polyphosphate residue being at least one member selected from the group including pyrophosphate residues, tripolyphosphate residues, tetrapolyphosphate

residues, trimetaphosphate residues, and tetrametaphosphate residues. The patent application ES2435069 A1 describes liquid formulation to improve metabolic processes during plant growth comprising amongst other lignosulfonate, copper sulfate and possibly menadione sodium bisulfite.

An object of the present invention is provide a liquid formulation including menadione sodium bisulphite (MSB), copper sulphate, sodium lignosulphonate, and essential plant amino acids, facilitating assimilation of the components of the formula, the use of which allows improving metabolic processes occurring during the different stages of development of plants, improving the appearance of the treated plants, activating their self-defences and resistance under biotic and abiotic adverse conditions, thereby allowing an increase in the yield and production of crops.

The liquid formulation of the invention includes water, thereby facilitating copper complexing with lignosulphonate, as well as, though to a lesser extent, with amino acids, thereby facilitating the incorporation or the capacity to absorb the copper supplied by part of the plant. Likewise, it produces greater mobilisation of copper in the plant, allowing its assimilation in a rapid, effective, and abundant manner, and allowing it to reach the place where its action is to be exerted. Finally, the action of MSB activating self-defences of the plant allows the plant to respond to such attacks of naturally and with a higher efficacy. Research in recent years point to the fact that amino acids and other low molecular weight organic acids are complexing agents which naturally use plants in the adsorption and assimilation of secondary elements and micro elements (Mullins *et al.,* 1986). Natural free amino acids have an intermediate complexing capacity, although all amino acids complex copper well (Lucena, Juan Jose, "El empleo de complejantes y quelatos en la fertilizatión de micronutrientes" (Use of complexing and chelating agents in micronutrient fertilization), Revista Ceres, vol. 56, no. 4, July-August, 2009, pp. 527-535, Universidade Federal de Vigosa, Brasil).

In one embodiment, the liquid formulation of the invention has between 10 and 15% of sodium lignosulphonate, between 15 and 25% of copper sulphate, between 0.20 and 0.40% of MSB, and between 1.30 and 1.75% of free amino acids of plant origin, the rest being water. The percentages by weight are expressed with respect to 100% by weight of the final liquid formulation.

In one embodiment of the invention, the copper sulphate has a copper content of 25% by weight.

Preferably, the liquid formulation of the invention is made up of 12% of sodium lignosulphonate, 20% of copper sulphate with a copper content of 25%, 0.40% of MSB, 1.60% of free amino acids of plant origin, and 66% of water.

Another object of the invention is the use of the formulation described above for decreasing the incidence and severity of symptoms of diseases in plants, particularly grapevine wood. As mentioned, its use allows improving metabolic processes occurring during the different stages of development, improving the appearance of the treated plants, activating their self-defences and resistance under biotic and abiotic adverse conditions, thereby allowing an increase in the yield and production of crops. The formulation of the invention further acts as stimulant of certain metabolic reactions of plants that are basic for their development and growth.

In a preferred use of the formulation of the invention, said formulation is incorporated into the soil by means of fertigation, drip irrigation, by spraying, or by distributing it in areas close to the plant in surface irrigation, during the initial stages of crop development, to stimulate new root formation. The dose of the formulation of the invention to be used 20 to 40 litres per hectare of crop and season.

### Example 1

An assay was conducted with the formulation of the invention to evaluate its effect on diseases of grapevine wood.

Namely, an assay was conducted with three areas of vineyard of the *tempranillo* variety, the formulation of the invention and, for purpose of comparison, a liquid fertilizer of those normally used in crops of this type being applied in each case through the roots to one of them. An untreated area was defined as a control. Three applications of the formulation of the invention and of the comparative formulation were performed in three consecutive weeks at a ratio of 30 l/ha, before flowering.

Experimental control was carried out in the three areas, for which purpose a symptomatological diagnosis (symptoms of Eutypa dieback, length of shoot, symptoms of esca), a study of the nutrient status and response to abiotic stress (leaf analysis, physiological measurements of photosynthesis, and water stress), as well as a phytopathological study (isolation of fungi in wood samples), were carried out.

The results are shown below:

| % Reduction in incidence of esca | |
|---|---|
| Area with formulation of the invention | 41% |
| Area with comparative formulation | -29% |
| Untreated area | -39% |

| % Reduction in severity of esca* | |
|---|---|
| Area with formulation of the invention | 39% |
| Area with comparative formulation | 15% |
| Untreated area | -21% |
| *McKinney Index | |

As can be observed in the table, in the areas treated with the formulation of the invention there was a reduction in the incidence of esca in the vine stocks, whereas in the untreated areas or areas treated with the conventional formulation this parameter increased significantly. Moreover, in the areas treated with the formulation of the invention and with the comparative formulation a reduction in severity can be seen, this reduction being much greater in the case of the formulation of the invention, in the order of 2.6 times lower.

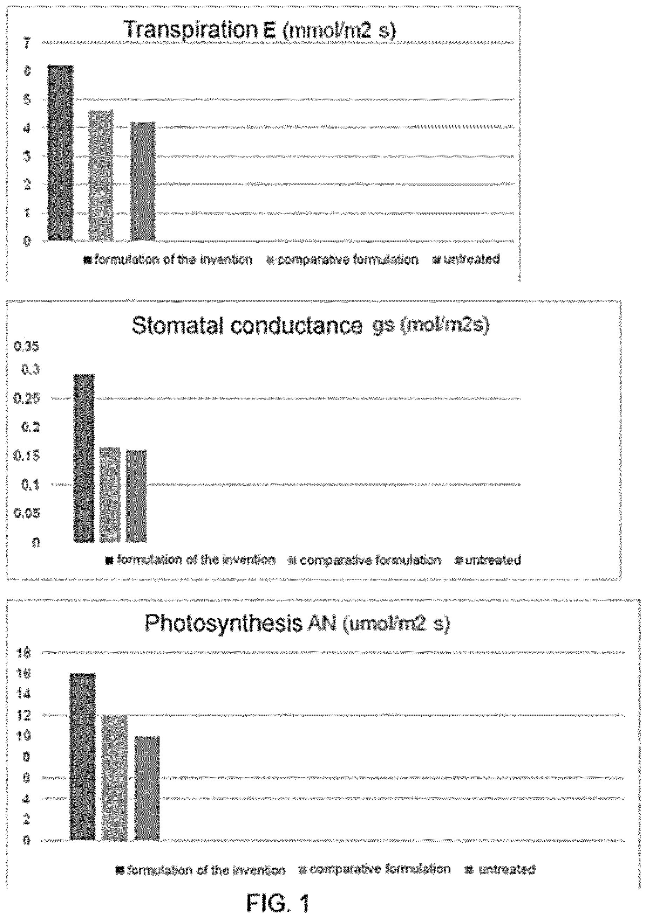

With regard to abiotic stress in symptomatic vine stocks, Figure 1 shows the results of the photosynthesis, stomatal conductance, and transpiration values measured in the vineyard areas object of study.

The results show that higher values were obtained in all the treated vine stocks than in the untreated vine stocks. However, in all the measured variables, vine stocks treated with the formulation of the invention show better values than vine stocks treated with the conventional product which, in some cases, were similar to those of untreated vine stocks.

## Claims

1. Copper-based liquid formulation enhancing plant self-defence consisting of between 10 and 15% of sodium lignosulphonate, between 15 and 25% of copper sulphate, between 0.20 and 0.40% of menadione sodium bisulphite (MSB), and between 1.30 and 1.75% of essential plant amino acids, the rest being water, the percentages being expressed by weight with respect to 100% by weight of the final liquid formulation.

2. Copper-based liquid formulation enhancing plant self-defence according to claim 1, **characterised in that** the copper sulphate has a copper content of 25% by weight.

3. Copper-based liquid formulation enhancing plant self-defence according to the preceding claims, **characterised in that** is made up of 12% of sodium lignosulphonate, 20% of copper sulphate with a copper content of 25%, 0.40% of MSB, 1.60% of essential plant amino acids, and 66% of water.

4. Use of the formulation according to claims 1 to 3 for decreasing the incidence and severity of symptoms of diseases in plants.

5. Use of the formulation, according to claim 4, wherein the plant is grapevine wood.

6. Use of the formulation according to claim 4 or 5, **characterised in that** it is incorporated into the soil by means of fertigation, drip irrigation, by spraying, or by distributing it in areas close to the plant in surface irrigation.

7. Use of the formulation according to claim 6, **characterised in that** it is used at a dose of 20 to 40 litters per hectare of crop and season.

## Patentansprüche

1. Flüssige Formulierung auf Kupferbasis zur Stärkung der Selbstverteidigung von Pflanzen, bestehend aus 10 bis 15 % Natriumlignosulfonat, 15 bis 25 % Kupfersulfat, 0,20 bis 0,40 % Menadion-Natriumbisulfit (MSB) und 1,30 bis 1,75 % essentiellen pflanzlichen Aminosäuren und zum Rest Wasser, wobei die Prozentangaben in Gewichtsprozent, bezogen auf 100 Gewichts-% der endgültigen flüssigen Formulierung, ausgedrückt sind.

2. Flüssige Formulierung auf Kupferbasis zur Stärkung der Selbstverteidigung von Pflanzen gemäß Anspruch 1, **dadurch gekennzeichnet, dass** das Kupfersulfat einen Kupfergehalt von 25 Gewichts-% aufweist.

3. Flüssige Formulierung auf Kupferbasis zur Stärkung der Selbstverteidigung von Pflanzen gemäß den vorhergehenden Ansprüchen, **dadurch gekennzeichnet, dass** sie aus 12 % Natriumlignosulfonat, 20 % Kupfersulfat mit einem Kupfergehalt von 25 %, 0,40 % MSB, 1,60 % essentiellen pflanzlichen Aminosäuren und 66 % Wasser besteht.

4. Verwendung der Formulierung gemäß den Ansprüchen 1 bis 3 zur Verringerung der Häufigkeit und Schwere von Krankheitssymptomen bei Pflanzen.

5. Verwendung der Formulierung gemäß Anspruch 4, wobei die Pflanze Weinrebenholz ist.

6. Verwendung der Formulierung gemäß Anspruch 4 oder 5, **dadurch gekennzeichnet, dass** sie mittels Fertigation, Tropfbewässerung, durch Versprühen oder durch Verteilen in pflanzennahen Bereichen mittels Oberflächenbewässerung in den Boden eingebracht wird.

7. Verwendung der Formulierung gemäß Anspruch 6, **dadurch gekennzeichnet, dass** sie in einer Dosis von 20 bis 40 Litern pro Hektar Anbaufläche und Jahreszeit eingesetzt wird.

## Revendications

1. Formulation liquide à base de cuivre renforçant l'autodéfense de plantes constituée d'entre 10 et 15 % de lignosulfonate de sodium, entre 15 et 25 % de sulfate de cuivre, entre 0,20 et 0,40 % de bisulfite sodique de ménadione (MSB), et entre 1,30 et 1,75 % d'acides aminés végétaux essentiels, le reste étant de l'eau, les pourcentages étant exprimés en poids par rapport à 100 % en poids de la formulation liquide finale.

2. Formulation liquide à base de cuivre renforçant l'autodéfense de plantes selon la revendication 1, **caractérisée en ce que** le sulfate de cuivre a une teneur en cuivre de 25 % en poids.

3. Formulation liquide à base de cuivre renforçant l'autodéfense de plantes selon les revendications précédentes, **caractérisée en ce qu'**elle est composée de 12 % de lignosulfonate de sodium, 20 % de sulfate de cuivre avec une teneur en cuivre de 25 %, 0,40 % de MSB, 1,60 % d'acides aminés végétaux essentiels, et 66 % d'eau.

4. Utilisation de la formulation selon les revendications 1 à 3 permettant de diminuer l'incidence et la gravité de symptômes de maladies chez des plantes.

5. Utilisation de la formulation, selon la revendication 4, dans laquelle la plante est du bois de vigne.

6. Utilisation de la formulation selon la revendication 4 ou 5, **caractérisée en ce qu'**elle est incorporée dans le sol au moyen d'une fertirrigation, d'une irrigation goutte à goutte, par pulvérisation, ou par sa répartition dans des zones proches de la plante en irrigation de surface.

7. Utilisation de la formulation selon la revendication 6, **caractérisée en ce qu'**elle est utilisée à une dose de 20 à 40 litres par hectare de culture et saison.
